# EUROPEAN PATENT SPECIFICATION

(11) **EP 1 406 504 B1**
(45) Date of publication and mention of the grant of the patent: **02.11.2016**
(21) Application number: 02756325.3
(22) Date of filing: 25.06.2002
(51) Int. Cl.: A23C 19/00, A23C 20/02, A23C 19/08, A23C 19/09, A23C 20/00

(54) **IMITATION CHEESE COMPOSITIONS FOR USE IN THE MANUFACTURE OF CHEESE LOAVES, SLICES, AND THE LIKE, AND METHOD OF PRODUCING SUCH COMPOSITIONS**
KÄSEIMITAT-PRODUKTE FÜR DIE HERSTELLUNG VON KÄSEHALTIGEN BROTLAIBEN, SCHNITTEN UND DERGLEICHEN, SOWIE VERFAHREN ZUR HERSTELLUNG VON SOLCHEN PRODUKTEN
COMPOSITIONS DE FROMAGE D'IMITATION DESTINEES A ETRE UTILISEES DANS LA FABRICATION DE PAINS DE FROMAGE, TRANCHES DE FROMAGE ET SIMILAIRES, AINSI QUE PROCEDE DE PRODUCTION DE TELLES COMPOSITIONS

(30) Priority: 25.06.2001 US 888720; 25.06.2002 US 183859
(43) Date of publication of application: 14.04.2004
(73) Proprietor: AFP Advanced Food Products LLC, New Holland, PA 17557 (US)
(72) Inventor: JACOBSON, Michael, R., Spring Valley, WI 54767-8704 (US); SCHALOW, Stephan, M., Leola, PA 17540 (US)
(74) Representative: Wilkinson, Stephen John
(86) International application number: PCT/US2002/020384
(87) International publication number: WO 2003/000062

(56) References cited:
- GB-A- 1 575 816
- US-A- 4 143 175
- US-A- 4 303 691
- US-A- 4 684 533
- US-A- 5 612 073
- US-A- 5 807 601

## Description

### BACKGROUND OF THE INVENTION

The present invention relates to an acidified imitation cheese composition having a good shelf life, having good mouthfeel and taste, which can be manufactured into imitation hard, soft, or semi-soft cheeses and safely packaged using virtually any commercial packaging system, including hotfill, retort, or aseptic systems. The acidified imitation cheese composition of the invention can be used to make an assortment of imitation cheese products, including imitation cheese loaves, logs and balls, imitation cheese sheets, imitation cheese wheels, imitation cheese slices, and imitation grated and shredded cheeses in a variety of flavors and colors.

Pasteurized process cheese products have been on the market for many years and are usually sold as shelf stable products. These products, such as the cheese slices used in the cheeseburgers of most American fast food restaurants, are favored by consumers and food service providers alike because of their versatility, shelf stability, and lower cost in comparison to natural cheese products. Pasteurized process cheese products typically have a relatively high pH (about 5.4 to 6.0) and a moisture content of approximately 50%. Because of their high pH, pasteurized process cheeses products fall into the category of "low acid food products" as defined in 21 C.F.R. § 114.3(d) (foods having a pH of greater than 4.6). It is well known in the industry that low acid products can easily become spoiled by microbial growth, thereby creating an unpleasant and potentially dangerous culinary experience for the consumer if handled or packaged improperly. To reduce the ever-present danger of microbial growth in low acid foods, in particular, contamination by *Clostridium botulinum,* the food industry has developed various methods of preservation applicable to low acid foods. Many low acid products are preserved by application of a high-temperature thermal treatment, such as sterilization, to a finished product, thereby destroying any viable bacterial contaminants. Commonly used food manufacturing procedures, such as aseptic and retort processing, incorporate these high heat treatments.

While effectively enhancing food safety, food sterilization through thermal processes has some inherent drawbacks. Both aseptic processing and retort processing require heating the finished product to high temperatures (around 121°C-148°C or 250°F-300°F) to accomplish sterilization. In addition to increased energy and equipment expenditures, high temperature processing can result in what is referred to as "burn on," linescale, or fouling of the product, where a commercially unacceptable burned or overcooked taste is imparted. Fouled product is unsaleable and is therefore discarded, resulting in a waste of materials and labor. Accordingly, the productivity and profitability of the manufacturing process is decreased.

Additionally, thermally sterilized food products must be retained by the manufacturer, by law, for an incubation period before releasing the product to the consumer. The finished product must be held in incubation for a minimum of approximately ten days before shipping, in order to verify that the sterilization process was adequate.

As an alternative to thermal sterilization, shelf stability can be achieved in some types of low acid products by control of the nature and amount of the various components which make up the substance of the food product. Preservatives may be added to the product, or bacterial growth may be controlled by limitations on the water activity (a_{W}) of the product's composition. However, these preservation methods have drawbacks which limit their practical applicability in large scale production and distribution situations. For example, foods containing large quantities of preservatives are disfavored by consumers, and enhanced shelf stability through control of water activity is feasible in only a narrow range of product types, because of the limitations placed on the composition of the product itself.

In the case of pasteurized process cheese products, bacterial stability is most often achieved though use of what is known in the art as "hurdle technology," a combined effect of carefully restricted levels of pH, moisture (water activity a_{W}), and salts (emulsifier phosphates and NaCl) in the process cheese composition, which is generally accepted in this field. Hurdle technology and its applications in the area of food preservation are well known and documented in the art, *e.g.,* Tanaka, J. Food Protect.; vol. 49, no. 7, pp. 526-531 (July 1986).

The hurdle technology food preservation model predicts the level of bacterial stability of a given composition, depending on the specific levels of each the four parameters ("hurdles") of pH, moisture, emulsifier phosphates, and NaCl present in the composition. However, because the effects of variations or deviations from any of the prescribed parameters are unpredictably synergistic, the hurdle predictive models have created a paradigm of the specific component levels. Therefore, production-scale hurdle manufacture is limited to a narrow range of permutations of each of the parameters, and is limited to a relatively low level of moisture in the product (58% moisture by weight, or less), in order to ensure proper preservation of the resultant food product.

In contrast to low acid foods, including pasteurized process cheeses, "acidified" foods, as defined in 21 C.F.R. § 113.4(a), do not require application of any of the preservation techniques discussed above. Because such products are less susceptible to microbial spoilage by virtue of their acidic pH, they can be formulated for taste, texture, and cost advantage without regard to the effects of high heat sterilization or parameters of moisture or other "hurdles."

Significantly, an acidified cheese-type product could be formulated without regard to the moisture parameter required by the hurdle processing of pasteurized process cheese. Thus, the overall moisture content of the cheese-type product could be drastically increased, thereby conferring a significant economic advantage upon the manufacturer, who may replace the costly solids components with less expensive water or moisture components, while maintaining food safety. In addition, freedom from the hurdle processing parameters would allow manufacturers more flexibility to produce the lower salt and/or lower fat cheese-type products containing non-traditional emulsifiers, for which there is a growing market demand, without sacrificing consideration of the safety of the cheese-type product.

Consequently, because of the safety, regulatory, and manufacturing advantages of high acid or "acidified" food products, an imitation cheese composition which retains the flavor, texture and consistency properties of conventional pasteurized process cheese manufactured using hurdle technology would be particularly desirable. Such an acidified imitation cheese composition would have the benefit of being safer than conventional pasteurized process cheeses preserved by hurdle technology and/or sterilization because the acidic pH is sufficient to retard the growth of microbial pathogens. In addition, processing costs would be less for an acidified imitation cheese composition, as no sterilization would be required, nor would adherence to the hurdle predictive models, thereby reducing utility costs and increasing productivity by eliminating fouling and spoilage resulting from errors in manufacturing.

In the past, attempts have been made to develop an acidified cheese-type product which could occupy the same market niche as pasteurized process cheese. However, these products fail to adequately mimic the flavor, texture, and consistency of conventional pasteurized process cheeses. Significantly, unlike the savory, cheesy flavors characteristic of conventional pasteurized process cheese, the acidified cheese-type products of the prior art have been characterized by unpleasant, sharp, tart, sour or acidic flavors. As a result, these products have been commercially unacceptable without the addition of flavor-imparting substances, such as tomatoes, onions, peppers, and smoke flavors, to mask the unacceptable tastes.

U.S. Patent No. 4,143,175 to Whelan et al. ("Whelan '175") discloses a cheese food product for use in a shelf stable pizza sauce with a moisture of up to 70%, a pH of less than 4.6 and between about 57% and 63% natural cheese. This product would be significantly more expensive to produce due to the high natural cheese content than the present invention.

U.S. Patent No. 4,089,981 to Richardson ("Richardson '981") discloses a fibrous simulated food product, wherein the pH is less than 4.6 and is generated with a low volume of acid. However, Richardson '981 discloses an imitation cheese product with moisture of only about 56%, and protein of about 6% and between 10% and 85% cellulose fiber. Unlike the present invention, this type of product would likely not provide the consistency desired for cheese or the additional advantages of lower manufacturing costs based on the use of a high moisture content along with a lower protein content.

U.S. Patent No. 4,031,254 to Kasik et al. ("Kasik'254") discloses a dry composition to which water is added to make cheese sauces and similar compositions. Even with the added water, the total moisture content is below 55% and the protein content is high. This does not offer the savings in manufacturing costs by using a higher moisture content and a lower protein content. The high protein content also may create a need for a higher amount of an acidulent in order to lower the pH, which would cause a sour acidic taste, similar to the known prior art.

U.S. Patent No. 4,684,533 to Kratochvil ("Kratochvil '533") discloses an imitation cheese product having a protein content of at least 1.5%, but with a pH not below 4.6.

U.S. Patent No. 5,009,867 to Kratochvil ("Kratochvil '867") discloses cheese-type products with high natural cheese contents.

U.S. Patent No. 4,608,265 to Zwiercan et al. ("Zwiercan '265") and U.S. Patent No. 4,937,091 to Zallie et al. ("Zallie'091 ") both disclose an imitation cheese, wherein up to 100% of the caseinate is replaced with starch. This results in a high starch, low protein imitation cheese. However, a high starch imitation cheese product of this type would likely have poor taste and textural characteristics. Additionally, in contrast to the present invention, it appears that this type of product relies on hurdle technology for shelf stability, based on its high solid, low moisture content.

US 4,303,691 (Sand et al) relates to a proteinaceous food product simulating cheese, but does not disclose a moisture content greater than 60% by weight of the imitation cheese composition. US 5,807,601 (Carpenter et al) describes an imitation cheese composition made with less than 2% protein. US 5,612,073 (Gamay) provides low fat cheese curd products. Consequently, there remains a need in the food industry for an acidified composition useful in the manufacture of imitation cheese, including imitation cheese loaves, logs and balls, grated and shredded imitation cheeses, and imitation cheese wheels, which possesses a flavor, texture and consistency as good as or superior to conventional pasteurized process cheese, yet, by virtue of its acidic pH, is resistant to microbial growth and less expensive to produce.

### BRIEF SUMMARY OF THE INVENTION

The invention is an imitation cheese loaf composition comprising:
a) moisture in an amount that is at least 60% by weight of the composition,
b) an acidulent in an amount not more than 1.5% equivalents of glacial acetic acid by weight of the composition that causes a pH of the composition to be not greater than 4.6,
c) a hydrocolloid,
d) a cheese-derived component in an amount less than 15% by weight of the composition, and
e) cheese flavouring, wherein the cheese flavouring is natural or artificial,
the composition being sufficiently firm at room temperature such that it can be at least one of sliced, cut, shredded or grated.

In another aspect of the invention, the moisture is present in an amount that is greater than 70% by weight of the composition. In further aspects, the pH is 2 to 4.5, and/or protein is present in an amount less than 1 % by weight of the composition.

The acidulent is preferably present in a total titrateable amount of less than 1.5%, and is more preferably present in a total titrateable amount of less than 0.5%. Also, the acidulent is preferably selected from the group consisting of cultured dextrose, glucono-δ-lactone, phosphoric acid and lactic acid.

The hydrocolloid is preferably present in an amount of at least 0.01 % by weight of the composition. The hydrocolloid is preferably selected from the group consisting of agar, alginate, carrageenan, gelatin, guar gum, locust bean gum, pectin and xanthan gum.

In another aspect of the invention, a method for preparing an imitation cheese composition, is provided that includes the following steps:
preparing a composition comprising moisture in an amount greater than 60% by weight of the composition, a hydrocolloid, a cheese-derived component in an amount less than 15% by weight of the composition, and cheese flavoring, wherein the cheese flavoring is natural or artificial; and acidifying the composition to a pH of not greater than 4.6, wherein the resulting composition is sufficiently firm such that it can be at least one of sliced, cut, shredded or grated.

### DETAILED DESCRIPTION OF THE PREFERRED EMBODIMENTS

It has been discovered that a shelf stable, high acid imitation cheese composition having a flavor, texture and consistency similar to that of the prior known pasturized cheeses can be made by combining moisture in an amount that is at least 60% by weight of the composition, a hydrocolloid, a cheese-derived component in an amount less than 15% by weight of the composition, cheese flavoring that is either natural or artificial, and an acidulent in an amount such that a pH of the composition is not greater than 4.6. Preferably, the imitation cheese has a protein content of less than 1% by weight. The imitation cheese composition can be used to manufacture cheese loaves, slices and similar products that are sufficiently firm such that they can be sliced, cut, shredded and/or grated. Preferably, the acidulent is in a total titrateable amount of less than 1.5% by weight of the composition.

The imitation cheese composition has several important advantages over the prior art. Its pH of 4.6 or less (high acid) inhibits undesirable bacterial growth allowing for a long shelf life with no refrigeration necessary without the need for thermal sterilization or adherence to hurdle predictive models.

As a result of the low amount of protein in the imitation cheese composition, a relatively low volume of acid is needed to drop the pH to 4.6 or less. The low acid volume creates a better tasting imitation cheese without the unpleasant, sharp, tart, sour or acidic taste characterized by the prior known compositions containing a high volume of acid.

Since proteins are expensive components of imitation cheese compositions, the lower amount protein translates into reduced manufacturing costs. Manufacturing costs are further reduced by the high moisture content of the imitation cheese composition, made possible by the bacterial growth prevention effect of the composition's low pH.

The imitation cheese compositions of the invention possess a smooth, creamy, and dairy-like mouthfeel, with a chewiness and springiness of texture similar to that of pasteurized process cheese. If desired, the composition of the invention can be formulated so as to exhibit a melting behavior similar to that of natural cheese.

The term "microbial stability," as used herein, means that the product described does not support vegetative cell growth or spore germination to unacceptable levels.

The term "shelf stable," as used herein, means a product which can be distributed and merchandized at 21°C (room temperature) with substantially little adverse affect on the microbial stability of the product.

The pH of the finished imitation cheese composition is not greater than 4.6, with a more preferred pH of 2 to 4.5, and a most preferred pH of 3.2 to 4.4. The pH is measured upon completion of the finished composition, either prior to final solidification of the composition, or after solidification, by any suitable means known in the art.

In this application, "imitation cheese" means imitation cheese and also cheese-type product. The imitation cheese composition of the invention is similar in texture and consistency to conventional pasteurized process cheeses. More precisely, the imitation cheese compositions of the invention have a textural character such that the fracturability of the compositions at 21°C is from 4.9 N to 9.8 N, as determined by texture profile analysis conducted on a Texture Technologies® TA-XT21 analyzer, available from StableMicro Systems, Scarsdale, New York, USA. It is preferred that the compositions have a fracturability of 5.9 N.to 7.9 N, and most preferred that the compositions have a fracturability of 6.9 N. The texture profile analysis to obtain the fracturability data of the compositions of the invention can be carried out routinely, as is known in the art, and as described in, *e.g.,* Bourne, M. C., Food Texture and Viscosity Academic Press, New York (reprinted, 1994), the contents of which are incorporated herein by reference.

Moisture is present in the imitation cheese composition. In a preferred embodiment, the moisture is present in an amount of greater than 60% by weight of the composition. It also is preferred that moisture be present in an amount of 65% by weight to 90% by weight, and it is more preferably in the range of 70% to 80% by weight of the composition. In a most preferred embodiment, moisture may be present in an amount of 75% by weight of the composition. The moisture may be present as added moisture to the composition, or as a component of another ingredient (e.g., diluted acidulent, whey). The moisture also can be combined with whey, or consist entirely of whey.

Hydrocolloids for use in the imitation cheese composition of the present invention include any hydrocolloid or other food grade thickeners, any or all of which will hereinafter be referred to as "hydrocolloids." Hydrocolloids include a food grade hydrocolloid or mixture thereof known in the art capable of forming a gel-like, supportive matrix. Suitable hydrocolloids include food grade gums, such as guar gum, pectin, locust bean gum, xanthan gum, ghatti gum, and mixtures of such gums. Other useful hydrocolloids include gelatin, carboxymethylcellulose (CMC), tragacanth and plant-derived hydrocolloids, such as agar, alginate, carrageenan (kappa, iota, and lambda), and mixtures thereof. Preferred hydrocolloids include, for example, agar, pectin, xanthan gum, guar gum, locust bean gum, carboxymethylcellulose (CMC), and carrageenan (kappa, iota, and lambda) and mixtures of such. Cellulose or cellulose-derived hydrocolloids like CMC can be used as a hydrocolloid; however, if used in significant quantities, the resulting composition may possess an undesirable, bad-tasting, tough finished product.

In some embodiments, cellulose in an amount of up to 10% of the composition may be included. The presence of cellulose increases the amount of dietary fiber in the composition, an attractive feature for many consumers.

In any case, the selected hydrocolloid(s) are present in the imitation cheese composition in an amount sufficient to provide to the composition a formable body which can be molded or pressed into traditional cheese shapes such as loaves, logs, balls, chunks, or slabs. A person of ordinary skill in the art will recognize that this amount will vary depending on the water management qualities and/or gelling capacity of the particular hydrocolloids used in a given composition. More precisely, the hydrocolloid(s) may be present in the composition in an amount of 0.01 % by weight to 40% or more by weight of the composition, with a more preferred hydrocolloid content of not more than 10% by weight of the composition, with a most preferred hydrocolloid content of not more than 6% by weight of the composition. In one embodiment, the composition includes a hydrocolloid in an amount of 0.01 % by weight to 40% by weight of the total composition, but no more than 10% by weight of the total hydrocolloid component is a cellulose.

The acidified imitation cheese composition described herein contains an acidulent(s) present in an amount sufficient to maintain a pH of not greater than 4.6, and thereby increase microbial stability of the finished product The acidified imitation cheese composition is microbially stable when it is simply pasteurized. Acidulents for use in the present invention may include any food grade organic or inorganic acids, or mixtures thereof. Examples of such acidulents are malic acid, citric acid, oxalic acid, tartartic acid, succinic acid, isocitric acid, finnaric acid, lactic acid, propionic acid, glucono-δ-lactone, acetic acid (vinegar), and mixtures thereof. Particularly preferred acidulents include, for example, cultured dextrose, glucono-δ-lactone, phosphoric acid, and lactic acid.

The volume of the acidulent used in the composition will vary depending on the particular acidulent selected, the dilution factor of the acidulent, and the presence or absence of buffering components in the finished imitation cheese composition. The volume of acidulent should be sufficient to adjust the pH of the composition to not greater than 4.6, but preferably not to exceed a total titrateable acid (TTA) level of 1.5% by weight of the composition.

It is desirable that the TTA of the finished composition should not exceed 1.5% by weight, and is preferably less than 0.5% by weight. The TTA can be determined by the percent by weight of equivalents of glacial acetic acid present in the finished composition. Therefore, the present compositions may have not greater than 1.5% equivalents of glacial acetic acid by weight in the finished composition. It is preferred that the compositions contain 0.01% to 0.4% of equivalents of glacial acetic acid by weight, and it is most preferred that the compositions contain 0.1% by weight to 0.3% by weight of equivalents of glacial acetic acid by weight of the composition.

The acidified imitation cheese composition preferably includes a cheese-derived component in an amount of no more than 15% by weight of the composition. The term "cheese-derived component" as used herein includes any type of cheese, as defined in 21 C.F.R. § 133, as well as food grade components obtained through the reduction, distillation, enzymatic (or fermentation) processing, or other chemical processing of such cheese or cheeses.

The imitation cheese composition may also include a cheese flavoring which imparts a characteristic savory, cheesy taste to the compositions. Suitable cheese flavorings include all those which are known in the art, such as enzyme-modified cheeses, enzyme modified lactile products, synthetic or artificial cheese flavorings, lipolyzed dairy flavors, dairy/cheese top notes and dairy/cheese push notes. Suitable enzyme modified cheese flavorings and lipolyzed dairy flavors are available from, for example, International Flavors and Fragrances, Menomonee Falls, Wisconsin, USA. Natural and synthetic flavors suitable for use in the imitation cheese sauces of the present invention are available from, for example, Edlong, Elk Grove Village, Illinois, USA. The type of cheese flavoring selected will vary depending on the specific natural cheese which the imitation cheese composition is intended to mimic. Suitable natural cheese flavors include any natural cheese flavors, such as cheddar, feta, American, mozzarella, Parmesan, asiago, Romano, Colby, Monterey jack, Brie, Camembert, provolone, Muenster, Gorgonzola, Swiss, Roquefort, chevre, Gruyere, blue, mimolette, and Gouda.

The cheese flavorings may be added to the composition in liquid, powder or paste form. A person of ordinary skill in the art will recognize that the amount of flavoring will vary, depending on the type of flavoring selected and the intensity of flavor desired in the finished composition.

The imitation cheese compositions of the invention may contain an added protein, other than the cheese-derived component, in an amount of less than 1 % by weight of the composition. It is preferred that the protein be present in an amount of up to 0.7% by weight, and more preferred that the protein be present in the amount of 0.2% by weight to 0.5% by weight of the composition. It is most preferred that there is minimal or no added protein present (other than any incidental protein which may be included in other components of the composition).

If protein, other than the cheese-derived component, is present in the composition, it is preferred that such protein has a low buffering capacity, so as not to require additional acidulent to maintain the pH at not greater than 4.6. Specifically, it is preferred that the protein or proteins selected for inclusion in the composition have a buffering capacity such that, in an 1.0% by weight solution of the protein or proteins in deionized water, no more than 0.3 moles of acetic acid are required to move the pH of the solution one pH unit.

Additionally, depending on the texture or flavor desired, considerations of solubility (as indicated by the specific isoelectric points (p*I*) of a given protein or proteins) may guide the selection of the protein or proteins. It is preferred that the protein selected for use in the imitation cheese composition have an average isoelectric point (p*I*) of at least 5. Such protein(s) include, for example, alkali or acid processed gelatin, whey proteins and mixtures thereof.

When solubility and/or buffering capacity is not a concern, preferred proteins may include soy protein, casein, egg proteins, hydrolyzed vegetable proteins, gelatin (alkali and acid processed), whey proteins, and mixtures thereof. In one embodiment, it is preferred that casein be avoided, particularly in amounts greater than 10% by weight, as it may produce an objectionable texture to the composition upon processing.

Additionally, while other proteins may be present in the composition, it is preferred, in one embodiment, that no more than about 1% of proteins having a p*I* of at least 5 be included in the composition. In another embodiment, it is preferred that no more than 1% of a protein(s) selected from whey protein, soy protein, casein, egg protein or hydrolyzed vegetable protein be included in the composition.

If desired, the composition may contain a fat or fats. Fats or oils for use in the present invention may be of animal origin, vegetable origin, or mixtures thereof. Such fats may be in liquid form or solid form at room temperature (21°C). Fats for use in the present compositions include lard, butter, cream, butter oil, fully saturated vegetable oils, partially hydrogenated vegetable oils, non-hydrogenated vegetable oils, soybean oil, sunflower oil, olive oil, canola (rapeseed) oil, cottonseed oil, coconut oil, palm kernel oil, corn oil, butterfat, safflower oil, and mixtures thereof. Examples of preferred fats include partially hydrogenated vegetable oils, soybean oil, canola oil, sunflower oil, safflower oil, palm kernel oil, coconut oil, butterfat, or mixtures of such fats. In some cases, it is preferred that butterfat be used when preparing an imitation cheese composition, as it lends a pleasant, dairy-like note to the flavor of the sauce.

In general, the fat should be present in an amount sufficient to create the desired texture and consistency of the imitation cheese composition. More specifically, the fat or fats should be present in an amount of at least 5% by weight of the composition, with a more preferred amount of up to 50% by weight of the composition or, most preferred in an amount of 10% to 25% by weight of the composition. Fat(s) may also be avoided, in order to manufacture a fat free composition for health- or calorie-conscious consumers.

If the imitation cheese composition is prepared to contain a fat, the fat phase can exist in the finished product in emulsified form, *e.g.,* in a dispersion facilitated by long chain alcohol fatty acid emulsifiers, fatty acid emulsifiers, proteinaceous emulsifiers, or carbohydrate emulsifiers, or in a suspension; *e.g*., dispersed and immobilized within the matrix of the thickener in the absence of such emulsifiers.

If it is desired that the fat phase of the imitation cheese composition be an emulsion, chemical emulsifiers may be included within the composition to facilitate emulsification. Chemical emulsifiers include, for example, glycerol esters, such as mono- and diglycerides and diacetyl tartaric acid esters of mono- and diglycerides (DATEM); acid pyrophosphate; sodium stearoyl lactylate; fatty acid esters, such as polysorbates; and phospholipids, such as lecithins; and mixtures thereof. It is preferred that such chemical emulsifiers are present in the composition in an amount of up to about 5% by weight of the composition.

Depending on the character desired in the end composition, a sweetener or sweeteners may be added to the acidified imitation cheese composition. Examples of suitable sweeteners include artificial and natural sweeteners such as saccharin, sucrose, fructose, glucose, corn syrup, maltose, honey, glycerin, fructose, aspartame, sucralose, high fructose corn syrup, crystallized fructose, acesulfame potassium, and mixtures thereof. The amount of sweetener used in the acidified compositions will vary depending on the desired taste and the perceived sweetness of the specific sweetener selected.

If desired, bulking agents may be added to the compositions to enhance the textural properties. Suitable bulking agents include maltodextrin, corn syrup solids, dextrose, lactose, whey solids, and mixtures thereof.

Food starches can be used in the manufacture of the imitation cheese compositions of the present invention to aid in water management. Suitable starches include, for example, modified and unmodified food starches, corn starch (dent or waxy), rice starch, tapioca, wheat starch, flour, potato starch, native food starches having cross-linked polysaccharide backbones, and mixtures thereof.

Any colorants known in the art, including all Certified colorants and natural colorants may be used in the acidified food compositions to impart a cheese color to the compositions. If the end product desired is to be a yellow/orange imitation cheese composition, the preferred colorants are Certified Yellow #5, Certified Yellow #6, annatto, carotenels, or oleoresin paprika. Additionally, it may be desirable to include titanium dioxide in the composition, to increase overall opacity.

If desired, preservatives may be included in the acidified food composition to prevent discoloration or decay, and to further ensure avoidance of microbial or fungal spoilage, or other degradation of the composition's components. Such preservatives include, for example, sodium benzoate, potassium sorbate, sorbic acid and EDTA.

In addition to cheese flavorings discussed above, additional flavorings or flavor-enhancing additives may be included in the imitation cheese composition, as long as such additions do not substantially alter the character of the composition. Such flavorings may include, for example, spices, such as black pepper, white pepper, salt, paprika, garlic powder, onion powder, oregano, thyme, chives, basil, curry, Worcestershire sauce, soy sauce, mustard flower, yeast extracts, cumin and mixtures thereof. Additionally, particulate components such as fruit or vegetable matter, meat, tofu, or nuts may be added.

Although preferred amounts of the various components of the acidified food compositions have been detailed herein, it will be apparent to one of skill in the art that the amounts of the components can be varied depending on the taste, texture, viscosity, color, and/or other organoleptic properties desired in the final composition.

The acidified imitation cheese compositions described herein may be manufactured by a variety of acceptable methods commonly known in the art which achieve dispersion, suspension, and/or hydration and homogenization of the selected product components prior to the undertaking of any processing and packaging operations. Examples of equipment currently used in the art for such purposes include high-shear mixers, two-stage high pressure dairy homogenizers, plate-type exchangers, ribbon blenders, scrape surface heat exchangers (SSHE), shear pumps and lay-down cookers. Because of the microbial stability of the acidified food composition, the formulation is amenable to almost all manufacturing and packaging processes known in the art, unlike low acid products, which are limited to only those manufacturing/production processes which involve high heat sterilization, control of water activity and pasteurized process cheese products, which require application of hurdle processing.

In general, according to a preferred procedure, the compositions of the present invention are manufactured by mixing, in hot water (about 68°C or 155°F), all of the selected fats, colorants, acidulents, emulsifiers and flavorings under high shear in a high shear mixer. This portion ("the homogenized base") is then homogenized, in two stages, at 17.23/3.44 MPa (2500/500 psi) in a high-pressure dairy homogenizer. It is then cooled through a plate heat exchanger to about 10°C (50°F) and removed to a storage vessel. The selected thickeners and any desired particulate ingredients, such as vegetable matter, fruit or meats, are then suspended in cold water (about 10°C or 50°F) in the high shear mixer. The cold water suspension is then pumped into the cooled homogenized base.

It will be apparent to those of ordinary skill in the art that the above-described mixing process is not limited to a two-stage process. The final mixture could be created in a single stage mix, with or without homogenization, as is sometimes practiced in the food industry. The mixture formed by the addition of the cold water suspension to the homogenized base is then evaluated to ensure that it has the desired pH and TTA, before being further processed in such a way as to create a shelf stable product that requires no refrigeration.

If necessary or desired, the finished composition could be subjected to a thermal or other processes known in the art to eliminate the potential for fungal spoilage. Such processes include pasteurization, irradiation, high-pressure or high temperature sterilization, micro-wave processing and ohmic heating.

Packaging processes for the compositions described herein could include a high acid aseptic process technique, where the cooling of the product occurs in a process cooler, and the product is subsequently introduced into sterilized packages and sealed in a sterile zone; a hot fill process, where the product is heated to such a temperature as to kill yeasts, mold spores, and vegetative bacterial cells, the package is filled with a hot product, and the heat of the product kills unwanted pathogens in both the product and non-pre-sterilized packages; or a retort process, wherein the product is filled and sealed into packages at a relatively low temperature, after which it is heated in a pressurized retort vessel to a temperature sufficient to kill pathogenic microorganisms, and subsequently cooled. Any of these processes, when used in the manufacture of a composition of the present invention, will result in a commercially sterile finished product suitable for consumer consumption and which will remain shelf stable at room temperature.

The invention is further illustrated by the following specific examples.

### EXAMPLE 1

An imitation cheese loaf was prepared in a single stage process as follows, using the following ingredients:

| ***No.*** | ***Ingredient*** | ***Percent (by weight)*** |
|---|---|---|
| 1 | Water | 70.61 |
| 2 | DATEM | 0.3 |
| 3 | Coconut oil | 20.0 |
| 4 | Enzyme modified cheddar cheese flavoring | 1.1 |
| 5 | Salt | 1.2 |
| 6 | Kappa carrageenan | 0.2 |
| 7 | Cellulose gel | 1.0 |
| 8 | Titanium dioxide | 0.1 |
| 9 | Annatto powder (15%) | 0.04 |
| 10 | Maltodextrin | 1.5 |
| 11 | Cultured dextrose | 0.1 |
| 12 | Glucono-8-lactone | 0.36 |
| 13 | Agar | 2.5 |
| 14 | Pectin | 1.0 |

The entire amount of water was heated to 82°C (180°F) and placed in a high shear mixer. DATEM (ingredient no. 2) was added to the water and mixed under high agitation until blended. The coconut oil was added, and the entire mixture was sheared so as to melt the oil into the water-DATEM mixture. Ingredient nos. 5, 10, 9, 8, and 4 were added and the entire mixture was agitated until blended. Under high shear, the hydrocolloids (ingredient nos. 6, 7, 13, and 14) Were added. Finally, the acidulents (ingredient nos. 11 and 12) were added and blended throughout.

The entire mixture was held at 68°C (155°F) until the hydrocolloids became fully hydrated and no longer lumpy. The entire mixture was pumped into a high pressure homogenizer, and homogenization was carried out at 2000 psi in a single stage. The product was then packed into rectangular loaf-shaped containers, and cooled to form a gelled cheese like mass having a solid, sliceable consistency.

The pH of the resulting product was about 4.3, moisture was present in an amount of 70% by weight of the composition, and the composition possessed textural characteristics such that the fracturability of the composition was 7.1 N.

In summary, the imitation cheese composition has several important advantages over the prior art. Its high acidity inhibits undesirable bacterial growth and makes it shelf stable without the need for thermal sterilization or adherence to hurdle predictive models. The imitation cheese composition tastes better than other imitation cheese compositions due to this small amount of acid and can provide a taste that was only previously achievable with a pasturized process cheese product. The imitation cheese composition also is relatively inexpensive to manufacture because of the high moisture and low protein content.

## Claims

1. An imitation cheese loaf composition comprising:
a) moisture in an amount that is at least 60% by weight of the composition,
b) an acidulent in an amount not more than 1.5% equivalents of glacial acetic acid by weight of the composition that causes a pH of the composition to be not greater than 4.6,
c) a hydrocolloid,
d) a cheese-derived component in an amount less than 15% by weight of the composition, and
e) cheese flavoring, wherein the cheese flavoring is natural or artificial,
the composition being sufficiently firm at room temperature such that it can be at least one of sliced, cut, shredded or grated.

2. The composition according to claim 1, wherein the moisture is present in an amount that is greater than 70% by weight of the composition.

3. The composition according to claim 1, wherein the acidulent is in a total titrateable amount of less than 1.5% by weight of the composition such that the pH of the composition is not greater than 4.6.

4. The composition according to claim 1, wherein the acidulent is in a total titrateable amount of less than 1% by weight of the composition such that the pH of the composition is not greater than 4.6.

5. The composition according to claim 1, wherein the acidulent is in a total titrateable amount of less than 0.5% by weight of the composition such that the pH of the composition is not greater than 4.6.

6. The composition according to claim 1, wherein the acidulent is selected from the group consisting of cultured dextrose, glucono-δ-lactone, phosphoric acid and lactic acid.

7. The composition according to claim 1, wherein the pH is 2 to 4.5.

8. The composition according to claim 1, wherein the hydrocolloid is present in an amount of at least 0.01% by weight of the composition.

9. The composition according to claim 1, wherein the hydrocolloid is selected from the group consisting of agar, alginate, carrageenan, gelatin, guar gum, locust bean gum, pectin and xanthan gum.

10. The composition according to claim 1, further comprising a protein in an amount less than 1% by weight of the composition.

11. The composition according to claim 10, wherein the protein is present in an amount of 0.2% by weight to 0.5% by weight of the composition.

12. The composition according to claim 10, wherein the protein is selected from the group consisting of gelatin, whey protein, soy protein, egg protein and hydrolyzed vegetable protein.

13. The composition according to claim 10, wherein the protein has an average isoelectric point (p*I*) of at least 5.

14. The composition of claim 1, wherein the cheese-derived component is present in an amount of at least 0.1% by weight of the composition.

15. The composition of claim 1, further comprising no more than 1% by weight of the composition of a protein, other than the cheese-derived ingredient, having an average isoelectric point (p*I*) of at least 5.

16. The composition of claim 15, wherein the protein is one which has a buffering capacity such that a 1.0% solution of the protein in deionized water requires no more than 0.3 moles of acetic acid to change the pH of the solution by one pH unit.

17. The composition according to claim 1, further comprising a fat, other than the cheese-derived component.

18. The composition according to claim 17, wherein the fat is present as a fat phase dispersed and mobilized within the hydrocolloid.

19. The composition according to claim 17, wherein the fat is selected from the group consisting of soybean oil, canola oil, sunflower oil, safflower oil, palm kernel oil, coconut oil, olive oil and butterfat.

20. The composition of claim 17, wherein the fat is present in an amount of at least 5% by weight of the composition.

21. The composition of claim 1, wherein the cheese flavoring is selected from the group consisting of enzyme modified cheese, enzyme modified lactile products, and synthetic flavors.

22. The composition according to claim 1, wherein the composition has a fracturability of from 4.9N to 9.8 N at 21°C.

23. The composition of claim 1, further comprising a chemical emulsifier in an amount up to 5% by weight of the composition.

24. The composition of claim 23, wherein the chemical emulsifier is selected from the group consisting of monoglycerides, diglycerides, polysorbates, sodium stearoyl lactylate, and diacetyl tartaric acid esters of mono- and diglycerides (DATEM).

25. A method for preparing an imitation cheese composition, said method comprising:
preparing a composition comprising moisture in an amount greater than 60% by weight of the composition, a hydrocolloid, a cheese-derived component in an amount less than 15% by weight of the composition, and cheese flavoring, wherein the cheese flavoring is natural or artificial; and
acidifying the composition to a pH of not greater than 4.6 using an acidulent in an amount not more than 1.5% equivalents of glacial acetic acid by weight of the composition;
wherein the resulting composition is sufficiently firm at room temperature such that it can be at least one of sliced, cut, shredded or grated.

## Patentansprüche

1. Zusammensetzung für einen Analogkäse, umfassend:
a) eine Feuchtigkeit in einer Menge, die mindestens 60 Gew.-% der Zusammensetzung entspricht,
b) ein Säuerungsmittel in einer Menge, die nicht mehr als 1,5 % Äquivalente von Eisessig, bezogen auf das Gewicht der Zusammensetzung, entspricht, was einen pH-Wert der Zusammensetzung von nicht mehr als 4,6 bewirkt,
c) ein Hydrokolloid
d) eine aus Käse hergestellte Komponente in einer Menge von weniger als 15 Gew.-% der Zusammensetzung, und
e) ein Käsearomastoff, wobei der Käsearomastoff natürlich oder künstlich ist, die Zusammensetzung bei Zimmertemperatur hinreichend fest ist, damit sie mindestens in Stücke oder in Scheiben geschnitten, geschnitzelt oder geraspelt werden kann.

2. Zusammensetzung nach Anspruch 1, wobei die Feuchtigkeit in einer Menge von mehr als 70 Gew.-% der Zusammensetzung vorhanden ist.

3. Zusammensetzung nach Anspruch 1, wobei das Säuerungsmittel in einer gesamten titrierbaren Menge von weniger als 1,5 Gew.-% der Zusammensetzung vorhanden ist, sodass der pH-Wert nicht größer als 4,6 ist.

4. Zusammensetzung nach Anspruch 1, wobei das Säuerungsmittel in einer gesamten titrierbaren Menge von weniger als 1 Gew.-% der Zusammensetzung vorhanden ist, sodass der pH-Wert nicht größer als 4,6 ist.

5. Zusammensetzung nach Anspruch 1, wobei das Säuerungsmittel in einer gesamten titrierbaren Menge von weniger als 0,5 Gew.-% der Zusammensetzung vorhanden ist, sodass der ph-werft nicht größer als 4,6 ist.

6. Zusammensetzung nach Anspruch 1, wobei das Säuerungsmittel ausgewählt ist aus der Gruppe, bestehend aus kultivierter Dextrose, Glucono-δ-Lacton, Phosphorsäure und Milchsäure.

7. Zusammensetzung nach Anspruch 1, wobei der pH-Wert zwischen 2 und 4,5 liegt.

8. Zusammensetzung nach Anspruch 1, wobei das Hydrokolloid in einer Menge von mindestens 0,01 Gew.% der Zusammensetzung vorhanden ist.

9. Zusammensetzung nach Anspruch 1, wobei das Hydrokolloid ausgewählt ist aus der Gruppe, bestehend aus Agar, Alginat, Carrageen, Gelatine, Guarkernmehl, Johannesbrotkernmehl, Pektin und Xanthangummi.

10. Zusammensetzung nach Anspruch 1, ferner umfassend ein Protein in einer Menge von weniger als 1 Gew.-% der Zusammensetzung.

11. Zusammensetzung nach Anspruch 10, wobei das Protein in einer Menge von 0,2 Gew.% bis 0,5 Gew.-% der Zusammensetzung vorhanden ist.

12. Zusammensetzung nach Anspruch 10, wobei das Protein ausgewählt ist aus der Gruppe, bestehend aus Gelatine, Molkenprotein, Sojaprotein, Eiprotein und hydrolysiertem Pflanzenprotein.

13. Zusammensetzung nach Anspruch 10, wobei das Protein einen durchschnittlichen isoelektrischen Punkt (p*I*) von mindestens 5 aufweist.

14. Zusammensetzung nach Anspruch 1, wobei die aus Käse hergestellte Komponente in einer Menge von mindestens 0,1 Gew.-% der Zusammensetzung vorhanden ist.

15. Zusammensetzung nach Anspruch 1, ferner umfassend nicht mehr als 1 Gew.% der Zusammensetzung eines Proteins, anders als die aus Käse hergestellte Zutat, mit einem durchschnittlichen isoelektrischen Punkt (p*I*) von mindestens 5.

16. Zusammensetzung nach Anspruch 15, wobei das Protein eine Pufferkapazität aufweist, sodass für eine Lösung von 1,0 % des Proteins in entionisiertem Wasser nicht mehr als 0,3 Mole von Essigsäure erforderlich sind, um den pH-Wert der Lösung um eine pH-Einheit zu verändern.

17. Zusammensetzung nach Anspruch 1, ferner umfassend ein Fett, anders als die aus Käse hergestellte Komponente.

18. Zusammensetzung nach Anspruch 17, wobei das Fett als eine Fettphase vorhanden ist, die innerhalb des Hydrokolloids dispergiert und mobilisiert wird.

19. Zusammensetzung nach Anspruch 17, wobei das Fett ausgewählt ist aus einer Gruppe, bestehend aus Sojaöl, Rapsöl, Sonnenblumenöl, Distelöl, Palmkernöl, Kokosnussöl, Olivenöl und Butterfett.

20. Zusammensetzung nach Anspruch 17, wobei das Fett in einer Menge von mindestens 5 Gew. % der Zusammensetzung vorhanden ist.

21. Zusammensetzung nach Anspruch 1, wobei der Käsearomastoff ausgewählt ist aus der Gruppe, bestehend aus enzymmodifiziertem Käse, enzymmodifizierten Lactid-Erzeugnissen und synthetischen Aromastoffen.

22. Zusammensetzung nach Anspruch 1, wobei die Zusammensetzung eine Bruchneigung von 4,9 N bis 9,8 N bei 21 °C aufweist.

23. Zusammensetzung nach Anspruch 1, ferner umfassend einen chemischen Emulgator in einer Menge von bis zu 5 Gew.-% der Zusammensetzung.

24. Zusammensetzung nach Anspruch 23, wobei der chemische Emulgator ausgewählt ist aus der Gruppe, bestehend aus Monoglyceriden, Diglyceriden, Polysorbaten, Natriumstearyl Lactylat und Weinsäureestern von Mono- und Diglyceriden (DATEM).

25. Verfahren zur Zubereitung einer Zusammensetzung für Analogkäse, wobei das Verfahren umfasst:
Zubereitung einer Zusammensetzung, bestehend aus einer Feuchtigkeit in einer Menge von mehr als 60 Gew.-% der Zusammensetzung, einem Hydrokolloid, einer aus Käse hergestellten Komponente in einer Menge von weniger als 15 Gew.-% der Zusammensetzung und Käsearomastoff, wobei der Käsearomastoff natürlich oder künstlich ist; und
Ansäuerung der Zusammensetzung auf einen pH-Wert von nicht mehr als 4,6 unter Verwendung eines Säuerungsmittels in einer Menge von nicht mehr als 1,5 % Äquivalenten von Eisessig, bezogen auf das Gewicht der Zusammensetzung;
wobei die erhaltene Zusammensetzung bei Zimmertemperatur hinreichend fest ist, damit sie mindestens in Stücke oder in Scheiben geschnitten, geschnitzelt oder geraspelt werden kann.

## Revendications

1. Composition de pain de fromage d'imitation, comprenant :
a) une teneur en eau dans une quantité d'au moins 60 % en poids de la composition,
b) un acidifiant dans une quantité maximale de 1,5 % équivalent d'acide acétique glacial en poids de la composition, de manière à ce qu'un pH de la composition soit inférieur à 4,6,
c) un hydrocolloïde,
d) un composant dérivé de fromage dans une quantité inférieure à 15 % en poids de la composition, et
e) un arôme de fromage, ledit arôme de fromage étant naturel ou artificiel,
la composition étant suffisamment ferme à température ambiante pour être au moins tranchée, coupée, râpée finement ou en filaments.

2. Composition selon la revendication 1, dans laquelle la teneur en eau est présente dans une quantité supérieure à 70 % en poids de la composition.

3. Composition selon la revendication 1, dans laquelle l'acidifiant est dans une quantité titrable totale inférieure à 1,5 % en poids de la composition, de manière à ce que le pH de la composition soit inférieur à 4,6.

4. Composition selon la revendication 1, dans laquelle l'acidifiant est dans une quantité titrable totale inférieure à 1 % en poids de la composition, de manière à ce que le pH de la composition soit inférieur à 4,6.

5. Composition selon la revendication 1, dans laquelle l'acidifiant est dans une quantité titrable totale inférieure à 0,5 % en poids de la composition, de manière à ce que le pH de la composition soit inférieur à 4,6.

6. Composition selon la revendication 1, dans laquelle l'acidifiant est sélectionné parmi le groupe composé de cultures de dextrose, glucono-δ-lactone, acide phosphorique et acide lactique.

7. Composition selon la revendication 1, dans laquelle le pH est compris entre 2 et 4,5.

8. Composition selon la revendication 1, dans laquelle l'hydrocolloïde est présent dans une quantité d'au moins 0,01% en poids de la composition.

9. Composition selon la revendication 1, dans laquelle l'hydrocolloïde est sélectionné parmi le groupe composé d'agar, alginate, carraghénane, gélatine, gomme de guar, gomme de caroube, pectine et gomme xanthane.

10. Composition selon la revendication 1, comprenant en outre une protéine dans une quantité inférieure à 1 % en poids de la composition.

11. Composition selon la revendication 10, dans laquelle la protéine est présente dans une quantité comprise entre 0,2 % en poids et 0,5 % en poids de la composition.

12. Composition selon la revendication 10, dans laquelle la protéine est sélectionnée parmi le groupe composé de gélatine, protéine de lactosérum, protéine de soja, protéine d'oeuf et protéine végétale hydrolysée.

13. Composition selon la revendication 10, dans laquelle la protéine a un point isoélectrique (P*I*) moyen d'au moins 5.

14. Composition selon la revendication 1, dans laquelle le composant dérivé de fromage est présent dans une quantité d'au moins 0,1 % en poids de la composition.

15. Composition selon la revendication 1, comprenant en outre moins de 1 % en poids de la composition d'une protéine, autre que le composant dérivé de fromage, ayant un point isoélectrique (P*I*) moyen d'au moins 5.

16. Composition selon la revendication 15, dans laquelle la protéine est une protéine ayant un pouvoir tampon tel qu'une solution à 1,0 % de la protéine dans de l'eau déionisée nécessite moins de 0,3 mole d'acide acétique pour changer le pH de la solution d'une unité de pH.

17. Composition selon la revendication 1, comprenant en outre une matière grasse, autre que le composant dérivé de fromage.

18. Composition selon la revendication 17, dans laquelle la matière grasse est présente sous forme de phase grasse dispersée et mobilisée dans l'hydrocolloïde.

19. Composition selon la revendication 17, dans laquelle la matière grasse est sélectionnée parmi le groupe composé d'huile de soja, huile de colza, huile de tournesol, huile de carthame, huile de palmiste, huile de coco, huile d'olive et matière grasse laitière.

20. Composition selon la revendication 17, dans laquelle la matière grasse est présente dans une quantité d'au moins 5 % en poids de la composition.

21. Composition selon la revendication 1, dans laquelle l'arôme de fromage est sélectionné parmi le groupe composé de fromage modifié par des enzymes, produits lactés modifiés par des enzymes et arômes de synthèse.

22. Composition selon la revendication 1, dans laquelle la composition a une fracturabilité comprise entre 4,9 N et 9,8 N à 21°C.

23. Composition selon la revendication 1, comprenant en outre un émulsifiant chimique dans une quantité inférieure à 5 % en poids de la composition.

24. Composition selon la revendication 23, dans lequel l'émulsifiant chimique est sélectionné parmi le groupe composé de monoglycérides, diglycérides, polysorbates, stéaroyllactate de sodium, et esters diacétyltartriques de mono- et diglycérides.

25. Procédé de préparation d'une composition de fromage d'imitation, ledit procédé comprenant les étapes suivantes :
préparation d'une composition comprenant une teneur en eau dans une quantité supérieure à 60 % en poids de la composition, un hydrocolloïde, un composant dérivé de fromage dans une quantité inférieure à 15 % en poids de la composition, et un arôme de fromage, ledit arôme de fromage étant naturel ou artificiel ; et
acidification de la composition à un pH inférieur à 4,6 à l'aide d'un acidifiant dans une quantité maximale de 1,5 % équivalent d'acide acétique glacial en poids de la composition ;
dans lequel la composition obtenue est suffisamment ferme à température ambiante pour être au moins tranchée, coupée, râpée finement ou en filaments.
